# EUROPÄISCHE PATENTSCHRIFT

(11) **EP 0 566 949 B1**
(45) Veröffentlichungstag und Bekanntmachung des Hinweises auf die Patenterteilung: **02.08.1995**
(21) Anmeldenummer: 93105950.5
(22) Anmeldetag: 13.04.1993
(51) Int. Cl.: C01B 17/90, C01B 17/88

(54) **Verfahren zum Konzentrieren und Reinigen von Schwefelsäure**
Process for the concentration and purification of sulphuric acid
Procédé de concentration et de purification d'acide sulfurique

(30) Priorität: 23.04.1992 DE 4213324
(43) Veröffentlichungstag der Anmeldung: 27.10.1993
(73) Patentinhaber: BAYER AG, 51368 Leverkusen (DE)
(72) Erfinder: Horn, Elmar-Manfred, Dr., W-5090 Leverkusen (DE); Lailach, Günter, Dr., W-4150 Krefeld (DE); Savakis, Stylianos, Dr., W-5000 Köln 80 (DE)

(56) Entgegenhaltungen:
- EP-A- 0 022 181
- DE-A- 2 845 917
- FR-A- 854 510
- GB-A- 1 490 228

## Beschreibung

Die Erfindung betrifft ein Verfahren zum Konzentrieren und/oder Reinigen von Schwefelsäure auf Konzentrationen von 80 bis 97 % H₂SO₄, wobei Temperaturen im Bereich von 90 bis 350°C angewendet werden können und mit der Schwefelsäure in Berührung kommende Anlageteile aus speziellen Legierungen bestehen.

Aus ökologischen Gründen nimmt der Anteil derjenigen industriell verwendeten Schwefelsäure ständig zu, die durch Konzentrieren von verdünnten Gebrauchtsauren auf eine geeignete H₂SO₄-Konzentration zurückgewonnen worden ist. Im allgemeinen kann jedoch davon ausgegangen werden, daß das gegebenenfalls mit einer Reinigung verbundene Konzentrieren von Gebrauchtsäuren auf eine für die Wiederverwendung geeignete Konzentration im Vergleich zum Einsatz von reiner, konzentrierter Schwefelsäure, die aus sulfidischen Erzen oder Schwefel hergestellt wurde, unwirtschaftlich ist, Die hohen Kosten der Schwefelsäurerückgewinnung sind vor allem durch die Anschaffungs- und Instandhaltungskosten der verwendeten Anlagen sowie durch Energiekosten bedingt.

Ein Konzentrieren auf 93 bis 97 % H₂SO₄ hat den Vorteil, daß die meisten organischen Verunreinigungen durch die oxidierende Wirkung der Schwefelsäure oder durch gegebenenfalls zugesetzte Oxidationsmittel zerstört werden. Die traditionellen Verfahren für diese Hochkonzentrierung arbeiten bei Normaldruck und Temperaturen um 320°C. Dabei kann die Schwefelsäure in ausgemauerten Kesseln direkt mit heißen Verbrennungsgasen in Kontakt gebracht werden. Der Aufwand für die Abtrennung von Schwefelsäuredampf und Schwefeldioxid aus dem Abgas ist sehr groß, weshalb diese Verfahren kaum angewendet werden.

Alternativ kann in gußeisernen Pfannen, die in einen Feuerraum eingehängt und über denen ein Dephlegmator angeordnet ist, bei ca. 320°C bis zu einer Konzentration von 95 bis 96 % H₂SO₄ eingedampft werden (Pauling-Verfahren). Dabei ist sowohl der Energieaufwand wie vor allem der apparative Aufwand sehr hoch, denn die Durchsatzleistung pro Einheit ist nur gering. Um eine vertretbare Lebensdauer dieser Gußeisenpfannen zu erreichen, werden sie mit einer Wanddicke von 60 bis 100 mm hergestellt.

Um die Nachteile dieser traditionellen Verfahren zu vermeiden, wurden Verfahren entwickelt, bei denen das Konzentrieren der Schwefelsäure unter Vakuum bei tieferen Temperaturen erfolgt. Dabei können je nach Temperatur und H₂SO₄-Konzentration verschiedene Werkstoffe eingesetzt werden. Tantal ist wegen seiner Schweißbarkeit und guten Korrosionsbeständigkeit im Temperaturbereich bis maximal 200°C ein bevorzugter, aber sehr teurer Werkstoff. Es wird deshalb im allgemeinen nur als Werkstoff für Wärmeaustauscher verwendet, während die eigentliche Verdampferanlage aus Glas, emailliertem Stahl oder verbleitem und ausgemauertem Stahl besteht (Winnacker-Küchler, Chemische Technologie, Bd. 2 (4. Aufl.) Carl Hauser Verl. München, Wien 1982, S. 70-72).

Durch die Begrenzung auf Arbeitstemperaturen bis ca. 180°C ergeben sich häufig Probleme, weil bei diesen Temperaturen und der damit verbundenen Konzentration von maximal 93 % H₂SO₄ die organischen Verunreinigungen der Gebrauchtsäuren nicht ausreichend zerstört werden. Deshalb wurden verschiedene Verfahren vorgeschlagen, die es erlauben, den Arbeitsbereich auf höhere Temperaturen bis 330°C zu erweitern.

Gemäß DE-A-2 360 706 wird die unter Vakuum weitgehend eingedampfte Schwefelsäure in einer Pauling-Anlage bei 320°C und Normaldruck bis 96 % H₂SO₄ weiter konzentriert und gereinigt.

Nach EP-A-16 987 kann die Reinigung der auf ca. 90 % H₂SO₄ eingedampften Säure dadurch erfolgen, daß diese in gußeisernen oder emaillierten Kesseln mittels eingetauchter Infrarotstrahler auf 270 bis 330°C erwärmt und bis 96 % H₂SO₄ eingedampft wird.

EP-A-22 473 beschreibt ein Verfahren, bei dem die auf 90 % H₂SO₄ vorkonzentrierte Säure bei 140 bis 300°C auf mindestens 96 % H₂SO₄ konzentriert wird und nach Zugabe eines Oxidationsmittels in einem strahlungsbeheizten Quarzrohr bei ca. 320°C gereinigt wird.

Gemäß EP-A-22 181 ist die Konzentrierung der Schwefelsäure von ca. 75 % auf 90 bis 98,3 % unter Vakuum bei Temperaturen von 160 bis 250°C in Apparaturen aus Glas oder emailliertem Stahl möglich, wobei die Wärmezufuhr mittels Wärmeträgeröl in emaillierten Doppelmantelrohren erfolgt. Inzwischen sind auch Doppelmantelrohre aus Siliciumguß für diese Anwendung bekannt, wobei die Sprödigkeit und Thermoschockempfindlichkeit dieses Materials einen erheblichen Risikofaktor darstellt.

Alle diese Verfahren haben den Nachteil, daß sie den bekannten Korrosionsproblemen, die bei der Konzentrierung von Schwefelsäure auftreten, durch teure Werkstoffe wie Tantal, das obendrein im Anwendungsbereich auf maximal 200°C beschränkt ist, oder durch aufwendige Konstruktionen begegnen. Dabei sind die Sicherheitsrisiken duch die Verwendung bruchempfindlicher Werkstoffe wie Quarz und Siliciumguß und durch die Vielzahl von Dichtflächen, wie bei der Anwendung von Doppelmantelrohren als Wärmetauscher, beim Umgang mit 200 bis 330°C heißer, konzentrierter Schwefelsäure ganz erheblich.

Aufgabe war es daher, die Nachteile der bekannten Verfahren zum Konzentrieren und Reinigen von gebrauchter Schwefelsäure zu vermeiden und die Betriebssicherheit und Wirtschaftlichkeit dieser Verfahren wesentlich zu verbessern.

Diese Aufgabe konnte überraschenderweise dadurch gelöst werden, daß spezielle metallische Werkstoffe gefunden wurden, die bei Temperaturen bis 350°C gegenüber 80 bis 97%iger Schwefelsärue eine hohe Beständigkeit aufweisen, die außerdem gießbar, schmied- und mahlbar sowie schweißbar sind und gute mechanische Festigkeits- und Zähigkeitskennzahlen aufweisen.

Gegenstand der Erfindung ist ein Verfahren zum Konzentrieren von Schwefelsäure auf 80 bis 97 Gew.-% H₂SO₄ und gegebenenfalls zum Reinigen dieser Schwefelsäure bei Temperaturen von 90 bis 350°C, welches dadurch gekennzeichnet ist, daß das Konzentrieren und gegebenenfalls Reinigen der Schwefelsäure in Anlagen erfolgt, deren von der heißen Schwefelsäure beaufschlagte Anlagenteile ganz oder teilweise aus Knet-und/oder Gußwerkstoffen sowie Schweißzusatzwerkstoffen gefertigt sind, die aus austenitischen Eisen-Nickel-Chrom-Silicium-Legierungen mit
15,5 bis 17,5 Gew.-% Nickel
10 bis 12 Gew.-% Chrom
5,7 bis 6,5 Gew.-% Silicium
bis zu max. 0,06 Gew.-% Kohlenstoff
bis zu max. 1,5 Gew.-% Mangan
bis zu max. 0,03 Gew.-% Phosphor
bis zu max. 0,03 Gew.-% Schwefel
bis zu max. 0,15 Gew.-% Titan
bis zu max. 0,8 Gew.-% Zirkonium
bis zu max. 0,2 Gew.-% Stickstoff
bis zu max. 0,3 Gew.-% Molybdän
und dem Rest als Eisen sowie minimalen Mengen an nicht vermeidbaren Beimengungen einschließlich der zur Desoxidation verwendeten Elemente Magnesium, Aluminium und Calcium bestehen.

Zur weiteren Verbesserung der Warmumformbarkeit können diese Werkstoffe zusätzlich bis zu 0,01 Gew.-% Bor und bis zu 0,25 Gew.-% an Seltenen Erdmetallen enthalten.

Im folgenden werden die für die Schwefelsäure-Hochkonzentrierung geeigneten oben genannten austenitischen Legierungen beziehungsweise Werkstoffe als "Schwefelsäure-Austenit" bezeichnet.

Eine weitere Ausführungsform der Erfindung besteht darin, daß Schwefelsäure bei 90 bis 350°C auf 80 bis 97 % H₂SO₄-Gehalt konzentriert wird, wobei die zum Erhitzen und zum Verdampfen des Wassers benötigte Wärmeenergie indirekt über Wärmeaustauscher zugeführt wird, deren wärmeübertragende Trennwände aus Schwefelsäure-Austenit bestehen.

Die technische Ausbildung der Wärmeaustauscher richtet sich vorteilhaft nach den jeweiligen Prozeßbedingungen, Im Sinne der Erfindung können z.B, mit Rauchgasen beheizte Rohrbündelwärmeaustauscher, Rohrwände oder Rohrspiralen sowie Pfannen aus Schwefelsäure-Austenit eingesetzt werden.

Desgleichen sind mit Heizdampf oder Wärmeträgeröl zu beheizende Wärmeaustauscher aus Schwefelsäure-Austenit verwendbar, Diese können beispielsweise als Rohrbündel- oder als Plattenwärmeaustauscher ausgebildet sein.

Ein besonderer Vorteil der Erfindung ist, daß es sich bei Schwefelsäure-Austenit um einen schweißbaren Werkstoff handelt, wodurch die insbesondere bei Arbeitstemperaturen im Bereich von 250 bis 350°C kritischen Dichtungen vermieden werden können.

Außer den Wärmeaustauschern kann die gesamte Apparatur zur Konzentrierung und gegebenenfalls Reinigung der Schwefelsäure aus Schwefelsäure-Austenit bestehen, das heißt, daß auch Verdampfer, Rohrleitungen und Pumpen, die mit heißer 80 bis 97%iger Schwefelsäure in Kontakt kommen, aus Schwefelsäure-Austenit bestehen können.

Es sind auch Kombinationen von Schwefelsäure-Austenit mit anderen Werkstoffen, z.B. Siliciumeisenguß in Form von Siliciumeisenguß-Pumpen oder emaillierten Werkstoffen in Form von emaillierten Rohrleitungen möglich.

Die Erfindung soll anhand folgender Beispiele näher erläutert werden.

### Beispiel

Eine Anlage zum Konzentrieren von 70%iger Gebrauchtschwefelsäure aus der Produktion von Nitroaromaten auf eine Konzentration von 96 % H₂SO₄ wurde aus einem Schwefelsäure-Austenit folgender Zusammensetzung gefertigt:
17,49 Gew.-% Nickel
11,34 Gew.-% Chrom
5,94 Gew.-% Silicium
0,68 Gew.-% Mangan
0,41 Gew.-% Zirkonium
0,10 Gew.-% Titan
0,09 Gew.-% Molybdän
0,021 Gew.-% Phosphor
0,015 Gew.-% Kohlenstoff
0,001 Gew.-% Schwefel und
Rest im wesentlichen Eisen.

Die Anlage bestand aus einem Ausdampfgefäß (1,0 m Durchmesser, 3 m Höhe) mit aufgesetztem Dephlegmator. Das Ausdampfgefäß war über Rohrleitung mit einer Siliciumeisenguß-Pumpe und einem Plattenwärmeaustauscher (8 m² Austauschfläche) verbunden.

Mit der Pumpe wurden aus dem Ausdampfgefäß 25 m³/h 96%ige Schwefelsäure mit 290°C angesaugt und durch den Plattenwärmeaustauscher, in dem sie auf 310°C aufgeheizt wurden, in das Ausdampfgefäß zurückgefördert. Als Heizmedium diente Wärmeträgeröl, das im Plattenwärmeaustauscher von 350 auf 320°C abgekühlt wurde. Im Ausdampfgefäß wurde ein Druck von 0,4 bar (abs.) aufrechterhalten. Die aus dem Ausdampfgefäß ausfließende 96%ige Schwefelsäure wurde in einem Rohrbündelwärmeaustauscher auf 80°C abgekühlt. Als Kühlmedium diente die im Gegenstrom fließende 70%ige Nitroaromaten enthaltende Gebrauchtsäure, die auf 154°C aufgeheizt und anschließend kopfseitig in den Dephlegmator eingespeist wurde. Das verdampfte Wasser wurde zusammen mit den flüchtigen organischen Verbindungen kondensiert. Die konzentrierte Schwefelsäure, deren Verweilzeit in der Anlage etwa 55 Minuten betrug, war nahezu farblos und konnte wieder bei der Aromatennitrierung eingesetzt werden.

Die nach 6 Monaten Betriebszeit gemessenen Wandstärken der aus Schwefelsäure-Austenit gefertigten, schwefelsäurebeaufschlagten Anlagenteile (Verdampfer mit Dephlegmator, Rohrleitungen, Platten- und Rohrbündelwärmeaustauscher) zeigten keinen meßbaren Korrosionsabtrag. Lediglich im Bereich des Säurespiegels im Ausdampfgefäß lag der Abtrag bei ca. 0,2 mm/a.

## Patentansprüche

1. Verfahren zum Konzentrieren von Schwefelsäure auf 80 bis 97 Gew.-% Schwefelsäuregehalt und/oder zum Reinigen der Schwefelsäure bei Temperaturen von 90 bis 350°C sowie gegebenenfalls Abkühlen, dadurch gekennzeichnet, daß das Konzentrieren und/oder Reinigungen der Schwefelsäure und gegebenenflls Abkühlen in Anlagen erfolgt, deren von der heißen Schwefelsäure beaufschlagte Anlagenteile ganz oder teilweise aus Knet- und/oder Gußwerkstoffen sowie Schweißzusatzwerkstoffen gefertigt sind, die aus austenitischen Eisen-Nickel-Chrom-Silicium-Legierungen mit
15,5 bis 17,5 Gew.-% Nickel
10 bis 12 Gew.-% Chrom
5,7 bis 6,5 Gew.-% Silicium
bis zu max. 0,06 Gew.-% Kohlenstoff
bis zu max. 1,5 Gew.-% Mangan
bis zu max. 0,03 Gew.-% Phosphor
bis zu max. 0,03 Gew.-% Schwefel
bis zu max. 0,15 Gew.-% Titan
bis zu max. 0,8 Gew.-% Zirkonium
bis zu max. 0,2 Gew.-% Stickstoff
bis zu max. 0,3 Gew.-% Molybdän
und dem Rest als Eisen sowie minimalen Mengen an nicht vermeidbaren Beimengungen einschließlich der zur Desoxidation verwendeten Elemente Magnesium, Aluminium und Calcium bestehen, und gegebenenfalls zusätzlich bis zu 0,01 Gew.-% Bor und bis zu 0,25 Gew.-% Seltene Erdmetalle enthalten.

2. Verfahren nach Anspruch 1, dadurch gekennzeichnet, daß das Konzentrieren und/oder Reinigen und gegebenenfalls Abkühlen der Schwefelsäure in Anlagen erfolgt, deren Wärmeaustauscher aus austenitischen Eisen-Nickel-Chrom-Silicium-Legierungen gefertigt sind.

3. Verfahren nach Anspruch 2, dadurch gekennzeichnet, daß in den Wärmeaustauschern der 80 bis 97%igen Schwefelsäure Wärme aus einem Heizmedium zugeführt wird, wobei das Heizmedium Rauchgas, Dampf oder Wärmeträgeröl sein kann.

4. Verfahren nach Anspruch 2, dadurch gekennzeichnet, daß in den Wärmeaustauschern die konzentrierte Schwefelsäure von Temperaturen zwischen 90 und 350°C auf tiefere Temperaturen abgekühlt wird, wobei als Kühlmedium die zu konzentrierende Schwefelsäure oder Wasser verwendet wird.

5. Verfahren nach Anspruch 1, dadurch gekennzeichnet, daß das Konzentrieren und/oder Reinigen und gegebenenfalls Abkühlen der Schwefelsäure in Anlagen erfolgt, deren Verdampfer und/oder Rohrleitungen aus austenitischen Eisen-Nickel-Chrom-Silicium-Legierungen gefertigt sind.

6. Verfahren nach Anspruch 1, dadurch gekennzeichnet, daß die 90 bis 350°C heiße, 80 bis 97%ige Schwefelsäure mit Pumpen aus austenitischen Eisen-Nickel-Chrom-Silicium-Legierungen gefördert wird.

## Claims

1. Process for concentrating sulphuric acid to 80 to 97% sulphuric acid content and/or for purifying the sulphuric acid at temperatures of from 90 to 350° C and optionally cooling, characterised in that the concentration and/or purification of the sulphuric acid and optional cooling take(s) place in plant whereof those components which are impinged upon by the hot sulphuric acid are manufactured in whole or in part of wrought and/or cast materials and welding fillers which comprise austenitic iron-nickel-chromium-silicon alloys having
15.5 to 17.5 wt-% nickel
10 to 12 wt-% chromium
5.7 to 6.5 wt-% silicon
up to max. 0.06 wt-% carbon
up to max. 1.5 wt-% manganese
up to max. 0.03 wt-% phosphorus
up to max. 0.03 wt-% sulphur
up to max. 0.15 wt-% titanium
up to max. 0.8 wt-% zirconium
up to max. 0.2 wt-% nitrogen
up to max. 0.3 wt-% molybdenum
and the remainder iron together with minimal quantities of normally present impurities, including the elements magnesium, aluminium and calcium which are used for deoxidation, and optionally contain additionally up to 0.01 wt-% boron and up to 0.25 wt-% rare earth metals.

2. Process according to Claim 1, characterised in that the concentration and/or purification and optional cooling of the sulphuric acid take(s) place in plant whereof the heat exchangers are manufactured of austenitic iron-nickel-chromium-silicon alloys.

3. Process according to Claim 2, characterised in that heat is supplied to the 80 to 97% sulphuric acid in the heat exchangers from a heating medium, wherein the heating medium may be flue gas, steam or heat transfer oil.

4. Process according to Claim 2, characterised in that the concentrated sulphuric acid is cooled in the heat exchangers from temperatures of between 90 and 350° C to lower temperatures, wherein the sulphuric acid to be concentrated or water is used as the cooling medium.

5. Process according to Claim 1, characterised in that the concentration and/or purification and optional cooling of the sulphuric acid take(s) place in plant whereof the evaporator and/or piping is/are manufactured of austenitic iron-nickel-chromium-silicon alloys.

6. Process according to Claim 1, characterised in that the 80 to 97% sulphuric acid, at a temperature of 90 to 350° C, is conveyed by pumps of austenitic iron-nickel-chromium-silicon alloys.

## Revendications

1. Procédé de concentration de l'acide sulfurique à 80 jusqu'à 97 % en poids de teneur en acide sulfurique et/ou pour purifier l'acide sulfurique à des températures de 90 à 350°C et éventuellement le refroidir, procédé caractérisé en ce que l'opération de concentration et/ou de purification de l'acide sulfurique et éventuellement de refroidissement a lieu dans des installations dont des parties en contact avec l'acide sulfurique chaud sont constituées entièrement ou partiellement par des matériaux corroyés et/ou coulés ainsi qu'en des matériaux d'apport pour soudure, qui consistent en des alliages de fer austénitique/nickel/chrome/silicium contenant :
15,5 à 17,5 % en poids de nickel,
10 à 12 % en poids de chrome,
5,7 à 6,5 % en poids de silicium,
jusqu'à un maximum de 0,06 % en poids de carbone,
jusqu'à un maximum de 1,5 % en poids de manganèse,
jusqu'à un maximum de 0,03 % en poids de phosphore,
jusqu'à un maximum de 0,03 % en poids de soufre,
jusqu'à un maximum de 0,15 % en poids de titane,
jusqu'à un maximum de 0,8 % en poids de zirconium,
jusqu'à un maximum de 0,2 % en poids d'azote,
jusqu'à un maximum de 0,3 % en poids de molybdène,
le reste étant du fer ainsi que des quantités minimales en des impuretés d'accompagnement inévitables, ce qui comprend les éléments magnésium, aluminium et calcium servant à une désoxydation, et qui contiennent éventuellement en outre jusqu'à 0,01 % en poids de bore et jusqu'à 0,25 % en poids de métaux des terres rares.

2. Procédé selon la revendication 1, caractérisé en ce que l'opération de concentration et/ou de purification et éventuellement de refroidissement de l'acide sulfurique est réalisée dans des installations dont les échangeurs de chaleur sont fabriqués en des alliages de fer austénitique/nickel/chrome/silicium.

3. Procédé selon la revendication 2, caractérisé en ce que, dans les échangeurs de chaleur, la chaleur est apportée à l'acide sulfurique à 80 jusqu'à 97 % par un milieu caloporteur ou de chauffage, ce milieu pour chauffage ou caloporteur pouvant être constitué par des gaz de fumée, de la vapeur d'eau ou de l'huile caloporteuse.

4. Procédé selon la revendication 2, caractérisé en ce que, dans les échangeurs de chaleur, l'acide sulfurique concentré à des températures comprises entre 90 et 350°C est refroidi à de plus basses températures, avec utilisation comme milieu de refroidissement de l'acide sulfurique à concentrer ou de l'eau.

5. Procedé selon la revendication 1, caractérisé en ce que l'opération de concentration et/ou de purification et éventuellement de refroidissement de l'acide sulfurique a lieu dans des installations dont l'évaporateur et/ou les conduits tubulaires sont fabriqués en des alliages de fer austénitique/nickel/chrome/silicium.

6. Procédé selon la revendication 1, caractérisé en ce que l'acide sulfurique chauffé à 90 jusqu'à 350°C à la concentration de 80 à 97 % est mis en circulation à l'aide de pompes en des alliages de fer austénitique/nickel/chrome/silicium.
